# EUROPÄISCHE PATENTANMELDUNG

(11) **EP 1 710 650 A1**
(43) Veröffentlichungstag der Anmeldung: **11.10.2006**
(21) Anmeldenummer: 06112341.0
(22) Anmeldetag: 06.04.2006
(51) Int. Cl.: G05B 23/02

(54) **Verfahren zur Verbesserung eines Produktionsablaufs innerhalb einer Produktionseinheit sowie Software-Programm zur Erfassung und Bewertung an in einer Produktionseinheit eingesetzten Messmitteln**

(30) Priorität: 08.04.2005 DE 102005016478
(71) Anmelder: SIEMENS AKTIENGESELLSCHAFT, 80333 München (DE)
(72) Erfinder: Farchmin, Fred, 90530 Wendelstein (DE); Meier, Walter, 90765 Fürth (DE); Scharowsky, Arno, 91054 Erlangen (DE); Struck, Jens, 73035 Göppingen / Bartenbach (DE)

(57) **Zusammenfassung**

Um insgesamt den Produktionsablauf einer Produktionseinheit zu verbessern, indem die für die Qualitätssicherung eingesetzten Messmittel und die für diese notwendigen Kalibriermaßnahmen effizient eingesetzt werden, ist die Erfassung und Analyse aller produkt- und prozessqualitätsrelevanten Kalibriermaßnahmen innerhalb der Produktionseinheit vorgesehen. Die erfassten Daten umfassen hier zum einen messmittelspezifische Daten (M) sowie im Zusammenhang mit Kalibriermaßnahmen stehende Unternehmenskenndaten (U). Durch die Integration der Unternehmenskenndaten (U) werden gesamtunternehmerische Belange im Hinblick auf eine Analyse im Sinne des Gesamtunternehmens berücksichtigt.

## Beschreibung

Verfahren zur Verbesserung eines Produktionsablaufs innerhalb einer Produktionseinheit sowie Software-Programm zur Erfassung und Bewertung an in einer Produktionseinheit eingesetzten Messmitteln

Die Erfindung betrifft ein Verfahren zur Verbesserung eines Produktionsablaufs innerhalb einer Produktionseinheit sowie ein Software-Programm zur Erfassung und Bewertung von Daten im Zusammenhang von Kalibriermaßnahmen an in einer Produktionseinheit eingesetzten Messmitteln.

Bei der Produktion von technischen Gütern werden sowohl die Produkte und Zwischenprodukte als auch die einzelnen Produktions- und Verfahrensschritte einer laufenden Qualitätskontrolle unterzogen, um den Ausschuss, also die Anzahl der nicht weiter zu verwendenden Produkte oder Zwischenprodukte, möglicht gering zu halten.

Für diese Kontrolle werden bei komplexen Produkten und komplexen Produktionsabläufen heutzutage eine Vielzahl unterschiedlicher Mess- und Prüfmittel eingesetzt. Im Folgenden wird der Einfachheit halber allgemein von Messmitteln gesprochen. Die Messmittel müssen hierbei vordefinierten Anforderungen genügen. In vorbestimmten Intervallen ist daher eine Überprüfung und insbesondere eine Kalibrierung der Messmittel erforderlich.

Im Zuge der qualitätssichernden Maßnahmen werden alle produkt- und prozessqualitätsrelevanten Parameter neben der Messung auch dokumentiert. Um hier auch eine international anerkannte und verlässliche Dokumentation zu gewährleisten, werden die Messmittel entsprechend vorbestimmter Normen verwendet und durch speziell zugelassenes Kalibrierpersonal überprüft.

Die Messtechnik unterliegt einer ständigen technischen und methodischen Fortentwicklung. Allerdings wird ein Qualitätshandbuch, in dem die für die jeweilige Produktion relevanten Prüfmethoden und Messmittel dokumentiert und aufgeführt sind, oftmals nicht entsprechend der Entwicklung auf dem Gebiet der Messtechnik oder der technischen Entwicklung der Produktionsabläufe angepasst. Dies hat zur Folge, dass oftmals unrelevante Parameter gemessen und dokumentiert werden, dass teilweise zur Messung weniger geeignete Geräte oder umständliche Methoden herangezogen werden. Erschwerend kommt hinzu, dass üblicherweise innerhalb eines Unternehmens die Bereiche Produktion auf der einen Seite sowie Instandhaltung und Qualitätssicherung auf der anderen Seite meistens sowohl fachlich als auch organisatorisch getrennt sind und mitunter konträre Ziele verfolgen.

Die Kalibriermaßnahmen für die Messmittel werden entweder durch eigenes Personal oder durch Fremdpersonal durchgeführt. Aufgrund der Menge an eingesetzten, auch komplexen Messmitteln und der dadurch notwendigen Anzahl von Kalibriermaßnahmen innerhalb einer Produktionseinheit muss ein nicht unerheblicher Anteil an Ressourcen für die Kalibriermaßnahmen aufgewendet werden. Im Zuge von Effizienzsteigerungen wird hierbei oftmals das Outsourcing dieser Kalibriermaßnahmen diskutiert. Um sich hier einen Überblick über die anfallenden externen Kosten zu verschaffen, wird üblicherweise eine Liste der eingesetzten Messmittel erstellt, aufgrund derer dann die zu erwartenden Kosten kalkuliert werden. Die Leistung wird dann gegebenenfalls auf Grundlage dieser einmal erstellten Bedarfsanalyse in kontinuierlichen Abständen durchgeführt.

Es besteht hier die Gefahr, dass unnötige Ressourcen für nicht benötigte Leistungen verbraucht werden und dass durch überholte Messmittel eine nur unzureichende Qualitätssicherung eingesetzt ist.

Der Erfindung liegt daher die Aufgabe zugrunde, durch eine Steigerung der Effektivität und der Effizienz der im Hinblick auf die Messmittel eingesetzten Ressourcen den Produktionsablauf innerhalb einer Produktionseinheit zu verbessern.

Die Aufgabe wird gemäß der Erfindung gelöst durch ein Verfahren mit den Merkmalen nach Patentanspruch 1. Danach ist vorgesehen, dass zur Verbesserung des Produktionsablaufs innerhalb einer Produktionseinheit zu in der Produktionseinheit eingesetzten Messmittel zusammen mit messmittelspezifische Daten sowie zusätzlich im Zusammenhang mit Kalibriermaßnahmen stehende Unternehmenskenndaten in einem Computersystem zentral erfasst und analysiert werden. Anhand der Analyseergebnisse werden dann Aussagen über die Relevanz der Kalibriermaßnahmen getroffen.

Unter Produktionseinheit wird hier eine organisatorische, unter Umständen auch eine örtlich getrennte Einheit verstanden, die für die Produktion eines bestimmten Zwischen- oder Endprodukts zuständig ist. Unter messmittelspezifischen Daten werden die Bezeichnung der eingesetzten Messmittel, die Charakterisierung der eingesetzten Messverfahren sowie weitere Parameter verstanden, die den Betrieb und die Funktion der Messmittel charakterisieren.

Unter Unternehmenskenndaten werden hierbei alle im Zusammenhang mit Kalibriermaßnahmen stehenden Informationen verstanden, also solche Informationen, die innerhalb eines Unternehmens Einfluss auf die Überprüfung der Messmittel nehmen oder nehmen können. Diese Unternehmenskenndaten lassen sich insbesondere aufteilen in
- messmitteltechnische Kalibrierdaten
- organisatorische Kalibrierdaten sowie
- strategische Kalibrierdaten.
   Während die messmitteltechnischen Kalibrierdaten insbesondere konkrete Angaben bezüglich der Durchführung von Kalibriermaßnahmen sowohl technischer als auch kaufmännischer Natur enthalten, sind den organisatorischen Kalibrier- oder Unternehmenskenndaten Aussagen über die organisatorische Durchführung von Kalibriermaßnahmen zu entnehmen. In den strategischen Kalibrier- oder Unternehmenskenndaten sind Informationen über die grundlegenden Ausrichtungen des Unternehmens enthalten, wie beispielsweise allgemeine Qualitätsziele des Unternehmens.

Der Ausgestaltung des Verfahrens nach Anspruch 1 liegt hierbei die Überlegung zugrunde, dass für die sinnvolle und Ressourcen schonende Durchführung von Kalibriermaßnahmen die lediglich einzelne Betrachtung der eingesetzten Messmittel unzureichend ist, da hierbei dynamische Entwicklungen nicht berücksichtigt werden und allgemein kein Abgleich zwischen fachlich und organisatorisch unterschiedlichen Unternehmenseinheiten stattfindet. Dies birgt die Gefahr, dass insbesondere technisch veraltete und nicht mehr zeitgemäße Maßnahmen unter Verschwendung von Ressourcen durchgeführt werden. Ausgehend von dieser Erkenntnis ist vorgesehen, neben den messmittelspezifischen Daten auch die im Zusammenhang mit dem Kalibriermaßnahmen stehenden Unternehmenskenndaten zentral zu erfassen und gesamtheitlich zu analysieren. Neben der Einsparung von Kosten wird durch dieses Verfahren insbesondere auch erreicht, dass die eingesetzten Messverfahren und Messmittel im Zusammenhang mit der Analyse der Kalibriermaßnahmen überprüft und jeweils den aktuellen technischen Anforderungen des jeweils aktuellen Produktionsablaufs angepasst werden, um eine möglichst gute technische Qualität und einen geringen Ausschuss der hergestellten Produkte und Zwischenprodukte zu gewährleisten.

Unter Aussagen über die Relevanz von Kalibriermaßnahmen werden sowohl Aussagen über die technische Durchführung von Kalibriermaßnahmen als auch Aussagen im Hinblick auf organisatorische oder betriebswirtschaftliche Überlegungen im Zusammenhang mit Kalibriermaßnahmen verstanden.

Gemäß einer zweckdienlichen Weiterbildung umfassen die Unternehmenskenndaten mehrere der nachfolgenden Datensätze, die jeweils eine Kategorie bilden:
a) Einen Datensatz betreffend die Effektivität der Kalibriermaßnahmen. Unter Effektivität der Kalibriermaßnahmen werden hierbei sowohl technische als auch organisatorische Informationen in Bezug auf die Art der eingesetzten Kalibriermaßnahmen verstanden, ob also die richtigen Kalibriermaßnahmen in geeignet organisierter Weise durchgeführt werden.
b) Einen Datensatz betreffend die Effizienz der Kalibriermaßnahmen. Hierunter werden Daten verstanden, die sowohl technische als auch betriebswirtschaftliche Informationen im Hinblick auf die Durchführung einer jeweiligen Kalibriermaßnahme, also einer jeweiligen Art einer Kalibriermaßnahme wiedergeben.
c) Einen Datensatz betreffend die Infrastruktur zu den eingesetzten Messmitteln. Hierunter werden Informationen über die Verfügbarkeit und Ausstattung im Zusammenhang mit den Messmitteln verstanden.
d) Einen Datensatz betreffend operative Unternehmensdaten. Hierunter werden solche Daten im Zusammenhang mit Kalibriermaßnahmen stehend verstanden, die Angaben über die personelle und organisatorische Durchführung der Kalibriermaßnahmen innerhalb des Unternehmens enthalten.
e) Einen Datensatz betreffend strategische Unternehmensdaten. Hierunter werden insbesondere die auf der Managementebene anzusiedelnden Unternehmensziele, sowie generelle Budget- und Investitionspläne verstanden.

Die Kategorien a) - c) lassen sich hier als messmitteltechnische Kalibrierdaten zusammenfassen, wohingegen die Kategorie d) die organisatorischen Kalibrierdaten und die Kategorie e) die strategischen Kalibrierdaten angeben.

Mit diesen Kategorien lassen sich die grundlegenden relevanten Daten abschließend erfassen. Bevorzugt wird dieses Verfahren als ein standardisiertes Bewertungs- und Analyseverfahren eingesetzt. Durch die Aufstellung von insgesamt fünf Datensätzen, entsprechend zu diesen fünf Kategorien, lässt sich daher ein standardisiertes und universelles Bewertungs- und Analyseschema erstellen und durchführen.

Um möglichst aussagekräftige Daten zu erhalten, setzen sich die Datensätze gemäß einer zweckdienlichen Weiterbildung aus Teildatensätzen zusammen, wobei jeder Teildatensatz eine Teilkategorie abbildet.

Bevorzugt werden zusätzlich zu den eingesetzten Messmitteln alternative oder weitere für die Produktionseinheit relevante Messmittel für die Analyse berücksichtigt. Durch diese Maßnahme werden im Rahmen des vorliegenden Verfahrens Weiterentwicklungen auf dem Gebiet der Messtechnik als auch Neuerungen im Produktionsablauf berücksichtigt. Insbesondere wird hierdurch auch die Möglichkeit geschaffen, durch Vergleich mit alternativen oder neuen Messmitteln Handlungsalternativen aufzuzeigen, um somit die Qualitätssicherung in technischer Hinsicht zu verbessern und kostengünstiger auszugestalten.

Vorzugsweise werden für die Analyse zusätzliche aktuelle betriebswirtschaftliche Ist-Kennzahlen herangezogen. Unter betriebswirtschaftlichen Ist-Kennzahlen werden insbesondere bezifferbare Werte im Hinblick auf die eingesetzten Produktionsfaktoren verstanden. Dies sind sowohl organisatorische Daten, wie beispielsweise die Anzahl der Mitarbeiter, aufgeschlüsselt nach den einzelnen Organisationseinheiten innerhalb des Unternehmens, als auch kalkulatorische Daten im Zusammenhang mit den eingesetzten Messmitteln sowie im Zusammenhang mit den eingesetzten Kalibriermaßnahmen, als auch Produktionsdaten, wie beispielsweise Aussagen über die Anzahl der hergestellten Produkte oder über die Zuverlässigkeit der Produktionsanlage etc.

Durch die Einbeziehung der betriebsrelevanten Daten in die Analyse wird die Möglichkeit geschaffen, auch einen kalkulatorischen Vergleich zwischen unterschiedlichen Alternativen aufzuzeigen, um so eine Entscheidungsgrundlage für zukünftige Maßnahmen zu bilden. Zweckdienlicherweise wird aus den Daten mit Hilfe eines hinterlegten Algorithmus eine Entscheidungsgrundlage für künftige Maßnahmen erstellt. Insbesondere wird hierdurch eine Vergleichsalternative aufgezeigt. Allgemein lassen sich durch die Verarbeitung der Daten durch einen geeigneten Algorithmus Einspar- oder Verbesserungspotenziale ausloten und insbesondere auch grafisch darstellen.

Um die Analyse insgesamt transparent zu machen und zu vereinfachen, ist gemäß einer zweckdienlichen Weiterbildung vorgesehen, dass zu jedem einzelnen Datensatz bzw. Teildatensatz eine Teilanalyse der jeweiligen Daten durchgeführt wird und anhand des Teilanalyseergebnisses ein Wertungsfaktor für die jeweilige Teilkategorie ermittelt wird. Bevorzugt werden die erfassten Unternehmenskenndaten mit Vergleichsdaten verglichen. Dies erlaubt eine Aussage über die Aufstellung des eigenen Unternehmens beispielsweise gegenüber dem aktuellen technischen Standard oder auch gegenüber den Wettbewerbern. Zweckdienlicherweise werden zu den einzelnen Teilkategorien neben den eigenen Bewertungsfaktoren auch Vergleichsbewertungsfaktoren aufgestellt und einander grafisch gegenübergestellt. Aus dieser vereinfachten Vergleichsdarstellung anhand der Faktoren lässt sich auf einen Blick die eigene Position, aufgeschlüsselt nach jeder Teilkategorie, ablesen. Dies ermöglicht in einfacher Weise die Identifizierung von Schwächen bzw. Stärken und erlaubt somit, eine Priorisierung zu treffen, um mit geringem Einsatz eine möglichst große Verbesserung zu erzielen.

Gemäß einer bevorzugten Weiterbildung erfolgt die Erfassung der Unternehmenskenndaten software-unterstützt und anhand eines standardisierten Fragenkatalogs. Aufgrund der Standardisierung ist ein derartiges Softwareprodukt universell einsetzbar.

Um im Hinblick auf spezielle Anforderungen Anpassungen zu ermöglichen, ist dieser - vorzugsweise durch ein Grundmodul des Softwareprodukts verwirklichter - Fragenkatalog ergänzt um branchenspezifische und/oder unternehmensspezifische Teilkategorien. Die Datensätze der branchenspezifischen Teilkategorien werden hierbei bedarfsweise erfasst und berücksichtigen Daten und Informationen insbesondere im Hinblick auf die messmitteltechnischen Kalibrierdaten, die für die jeweilige Branche kennzeichnend sind. So werden branchenabhängig beispielsweise unterschiedliche Gewichtungen bei den Messmitteln gelegt.

Die unternehmensspezifischen Daten geben individuelle Belange des jeweiligen Unternehmens wieder. Dies betrifft insbesondere die organisatorischen Kalibrierungsdaten, beispielsweise die Frage nach der internationalen Aufstellung des jeweiligen Unternehmens.

Die Aufgabe der Erfindung wird erfindungsgemäß weiterhin gelöst durch ein Software-Programm gemäß Anspruch 13. Dieses dient zur Erfassung und Bewertung von Daten im Zusammenhang mit Kalibriermaßnahmen an in der Produktionseinheit eingesetzten Messmitteln. Es umfasst ein Modul zur Erfassung der messmittelspezifischen Daten sowie ein standardisiertes Grundmodul zur Erfassung der Unternehmenskenndaten. Weiterhin ist das Software-Programm zur Analyse der erfassten Daten im Hinblick auf die Relevanz von Kalibriermaßnahmen ausgebildet. Gemäß zweckdienlichen Weiterbildungen ist ein branchenspezifisches und/oder ein unternehmensspezifisches Erweiterungsmodul zur Erfassung von branchenspezifischen Daten bzw. zur Erfassung von individuellen unternehmensspezifischen Daten vorgesehen.

Die im Hinblick auf das Verfahren angeführten Vorteile und bevorzugten Ausgestaltungen lassen sich sinngemäß auch auf das Software-Programm übertragen.

Die Erfindung führt weiter auf ein computerlesbares Medium, auf dem das Software-Programm gespeichert ist.

Ein computerlesbares Medium, das einen Softwarecodeabschnitt aufweist, welcher ein Computersystem zur Durchführung des Verfahrens nach Anspruch 1 veranlasst, ist Gegenstand des Patentanspruchs 17.

Ein besonderer Vorteil der Standardisierung dieses Bewertungswerkzeugs liegt insbesondere auch in der einfachen Anwendbarkeit. Dies erlaubt eine routinemäßige Wiederholung in gewissen Zeitabständen, also ein wiederkehrendes oder ein wiederholtes Durchführen des Verfahrens.

Ein Ausführungsbeispiel der Erfindung wird im Folgenden anhand der Zeichnung näher erläutert. Es zeigen jeweils in schematischen, grob vereinfachten Darstellungen:
- FIG 1: eine stark vereinfachte Blockbild-Darstellung zur Illustration eines Verfahrens zur Erfassung und Analyse von produkt- und prozessqualitätsrelevanten Daten in Bezug auf Kalibriermaßnahmen von Messmitteln in einem Industrieunternehmen (Produktionseinheit) und
- FIG 2: eine schematisierte Vergleichsdarstellung von eigenen Daten mit Vergleichsdaten, aufgeschlüsselt nach einzelnen Teilkategorien.

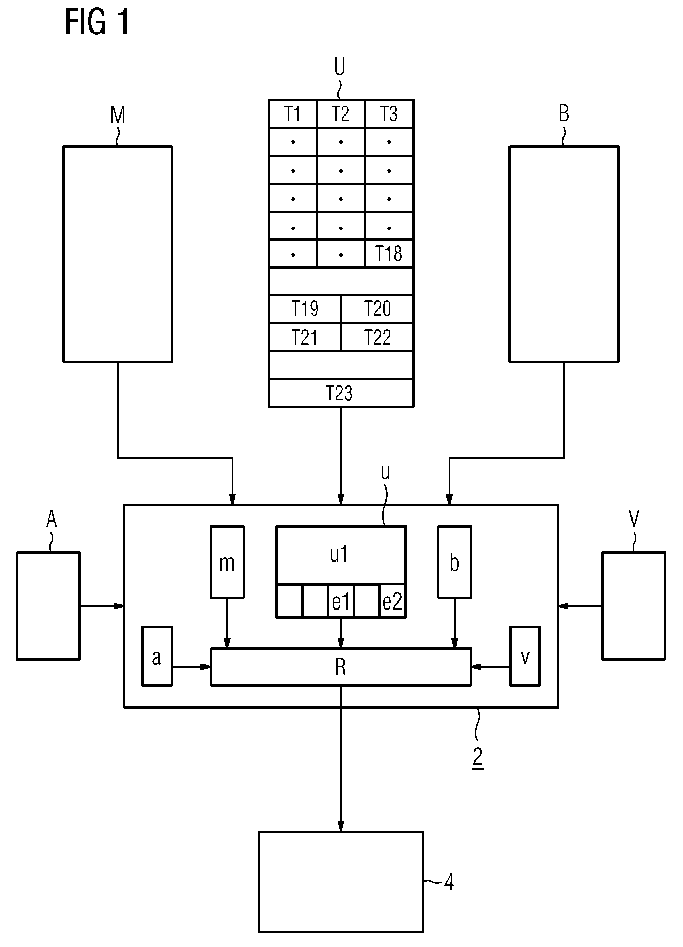

Das nachfolgend zu FIG 1 erläuterte Verfahren zur Erfassung und zur Analyse aller relevanten produkt- und prozessqualitätsrelevanten Daten in Bezug auf Kalibriermaßnahmen ist für eine einfache Handhabung in einem standardisierten Software-Programm integriert. Ausgehend von der Analyse, die umfassend alle im Zusammenhang mit Kalibriermaßnahmen relevanten Daten berücksichtigt, lassen sich Schwachstellen und Fehlentwicklungen sofort erkennen und insbesondere auch quantifizieren. Ausgehend von den Analyseergebnissen besteht daher die Möglichkeit, Maßnahmen zu treffen, die das gesamte MessmittelManagement innerhalb eines Industrieunternehmens bzw. innerhalb einer Produktionseinheit verbessern. Ein wesentlicher Vorteil des nachfolgend beschriebenen Verfahrens zur umfassenden Bewertung der relevanten Daten ist also insbesondere darin zu sehen, dass eine Qualitätssicherung der hergestellten Produkte auf hohem Niveau bei geringen Kosten sichergestellt ist. Insbesondere werden durch dieses Bewertungsverfahren technisch überholte oder nicht mehr erforderliche Maßnahmen identifiziert, so dass diese ohne Einbußen am Qualitätsstandard aufgegeben oder durch andere Maßnahmen ersetzt werden können.

Das standardisierte Bewertungsverfahren zeichnet sich dadurch aus, dass umfassend Daten für die Bewertung herangezogen werden. Insgesamt werden gemäß dem Ausführungsbeispiel der FIG 1 folgende Daten erfasst:
- messmittelspezifische Daten M der in der Produktionseinheit eingesetzten Messmittel
- im Zusammenhang mit Kalibriermaßnahmen stehende Unternehmenskenndaten U
- betriebswirtschaftliche Ist-Kennzahlen B
- Daten A zu zusätzlichen oder alternativen Messmitteln, die für die Produktionseinheit relevant sind sowie
- Vergleichsdaten V.

Die Erfassung insbesondere der Daten M, u, B erfolgt hierbei insbesondere softwareunterstützt und zwar nach Art einer Fragebogenerfassung. Die Erfassung erfolgt daher vorzugsweise menugeführt über eine entsprechende Rechnereinheit. Alternativ besteht natürlich auch die Möglichkeit, Fragebogen in Papierform zu erstellen und nachträglich die Daten M einzugeben. Die Erfassung der messmittelspezifischen Daten wird bevorzugt im Rahmen einer Anlagenbegehung durch geschultes Personal durchgeführt. Zugleich wird auch eine fachliche, positionsweise Analyse durch das geschulte Personal einer hierbei erstellten Messmittelliste durchgeführt.

Die Unternehmenskenndaten U sind insgesamt untergliedert in achtzehn standardisierte Teil-Kategorien T1 - T18 sowie vier branchenspezifische Teil-Kategorien T19 - T22 und eine unternehmensspezifische Teil-Kategorie T23. Die standardisierten Teil-Kategorien T1 - T18 bilden Unterkategorien zu insgesamt fünf übergeordneten Kategorien, die
- die Effektivität der Kalibriermaßnahmen,
- die Effizienz der Kalibriermaßnahmen,
- die Infrastruktur zu den eingesetzten Messmitteln,
- operative Unternehmensdaten sowie
- strategische Unternehmensdaten
   betreffen.

Die strategischen Unternehmensdaten sind hierbei Daten im Hinblick auf die Qualitätsstrategie (T1) im Hinblick auf das generelle Budget im Zusammenhang mit Kalibriermaßnahmen und dem Messmittelmanagement (T2), im Hinblick auf den Investitionsplan im Zusammenhang mit den Kalibriermaßnahmen und den Messmitteln (T3) sowie im Hinblick auf Aspekte der Unfallverhütung und Arbeitssicherheit (T4).

Die Effektivität der Kalibriermaßnahmen wird in zwei Teil-Kategorien untergliedert, von denen die eine organisatorische Informationen im Hinblick auf die Kalibriermaßnahmen betrifft (T5), nämlich die Frage, welche Funktionen und welche Verantwortlichkeiten im Unternehmen hierzu bestehen. Die zweite Teil-Kategorie betrifft technisch-organisatorische Informationen zu den Kalibriermaßnahmen (T6), insbesondere wann diese durchgeführt werden, ob innerhalb oder außerhalb des Unternehmens, was kalibriert wird, wie viel kalibriert wird etc. Allgemein betrifft die Kategorie Effektivität daher Daten, mit deren Hilfe überprüft wird, ob die richtigen organisatorischen Maßnahmen sowohl personeller als auch technischer Natur vorgesehen sind.

Die Kategorie der Effizienz befasst sich demgegenüber mit der Frage, wie die eingesetzten Kalibriermaßnahmen möglichst effizient und damit kostengünstig durchgeführt werden können. Hierzu ist eine kaufmännische Teil-Kategorie (T7) vorgesehen, die Informationen zu der Frage betrifft, ob es effizienter ist, die Kalibriermaßnahmen durch eigenes Personal oder Fremdpersonal durchführen zu lassen. Eine weitere Teil-Kategorie (T8) befasst sich mit technischen Aspekten der Effizienz, nämlich welche Kalibriermethode sinnvoll ist.

Die Kategorie der Infrastruktur umfasst die Teil-Kategorie Labor (T9), die Teil-Kategorie Mess- und Prüfmittel (T10) sowie die Teil-Kategorie Ersatzteile (T11) bzw. Lagerhaltung und Bestandsführung. Die Daten zur Infrastruktur sind notwendige Detailinformationen, beispielsweise auch für die Frage, ob eine Kalibriermaßnahme durch Eigenpersonal oder durch Fremdpersonal durchgeführt werden soll, da diese Frage entscheidend von den im Unternehmen vorhandenen Mitteln abhängt. Auch ist die Frage der Lagerhaltung und Bestandsführung von wesentlicher Bedeutung, da die Kalibriermaßnahmen eine gewisse Zeit erfordern, insbesondere wenn sie bei mobilen Messgeräten außer Haus durchgeführt werden. Gleichzeitig muss während dieser Zeit für die weitere Fortführung der Qualitätssicherung ein Ersatzgerät bereitgestellt sein.

Schließlich umfasst die Kategorie betreffend operative Unternehmensdaten alle Daten zu Prozessen, die im Zusammenhang mit der Durchführung von Kalibriermaßnahmen zu sehen sind. Diese Kategorie ist unterteilt in die Teil-Kategorien Arbeitsvorbereitung (T12), Beschaffung und Disposition (T13), operative Umsetzung (T14), Standardisierung (T15), Administration (T16), Daten- und Informationsmanagement (T17) sowie Kontrolling (T18). Neben diesen insgesamt 18 standardisierten Teil-Kategorien werden bei Bedarf weitere fünf Teil-Kategorien gebildet. Diese sind vier branchenspezifische Teil-Kategorien T19 - T22, die branchenspezifische Belange besonders berücksichtigen. Die Daten zu diesen Teil-Kategorien werden nur bei Bedarf erfasst. Die Teil-Kategorie T23, betrifft die unternehmensspezifischen Daten. Auch hier werden die Daten nur dann erfasst, wenn besondere individuelle unternehmensspezifische Gegebenheiten, wie beispielsweise ein starker internationaler Bezug, bestehen, die für eine aussagekräftige Analyse separat berücksichtigt werden müssen.

Die betriebswirtschaftlichen Ist-Kennzahlen B betreffen beispielsweise Informationen zu der Anzahl der Mitarbeiter in der Qualitätssicherung, in der Instandhaltung, in der Administration, im Einkauf, in der Produktion, sowie ihre Auslastung. Weiterhin werden hier Informationen zum Aufwand für die Kalibrierung bzw. Instandsetzung (operativ/administrativ), zu den Kosten für externe Dienstleister für Kalibriermaßnahmen oder für Justage und Reparaturen erfasst. Weiterhin werden Daten betreffend die Gesamtanlage erfasst, wie beispielsweise deren Verfügbarkeit, ihre Zuverlässigkeit, das Qualitätsniveau der erzeugten Produkte, die produzierte Menge, die Menge des Ausschusses usw.

Aus den messmittelspezifischen Daten M wird eine Messmittelliste der in der Produktionseinheit eingesetzten Messmittel zusammen mit Informationen und bevorzugt einer Bewertung zu den einzelnen Messmitteln erfasst.

Die Datensätze M, U und B betreffen daher im Wesentlichen unternehmensspezifische Daten. Für die Analyse werden zusätzlich die Vergleichsdaten V und die Daten A betreffend alternative Messmittel herangezogen. Diese Daten können ebenfalls separat erfasst werden oder sind bereits in einem Speicher abgespeichert und werden zur Analyse lediglich herangezogen.

Zur Erfassung der Daten umfasst das Software-Programm jeweils zu den Datensätzen M, U, B, A, V zugeordnete Module. Diese sind in der Darstellung nach FIG 1 korrespondierend zu den Datensätzen mit den Buchstaben m, u, b, a und v bezeichnet. Das Modul u zur Erfassung der Unternehmenskenndaten U untergliedert sich in ein Grundmodul u1, welches zur Abfrage der Daten zu den Teil-Kategorien T1 - T18 ausgebildet ist. Weiterhin umfasst das Modul u ein ersts Erweiterungsmodul e1 zur Erfassung der branchenspezifischen Teil-Kategorien T19 - T22 sowie ein Erweiterungsmodul e2 zur Erfassung der unternehmensspezifischen Teil-Kategorie T23. Die erfassten Daten werden in einem hier nicht dargestellten Zwischenspeicher gespeichert und aus diesem für die Analyse bedarfsweise abgerufen. Für die Analyse ist eine Rechenregel R bzw. ein Algorithmus hinterlegt, in dem die einzelnen erfassten Daten weiterverarbeitet werden. Insbesondere wird hier auch anhand eines hinterlegten Punkteschemas den einzelnen Teil-Kategorien T1 - T23 eine Wertzahl zugewiesen. Gleichzeitig enthalten die Vergleichsdaten V korrespondierende Teil-Kategorien und jeder dieser Teil-Kategorien der Vergleichsdaten ist ebenfalls ein Vergleichswert zugeordnet.

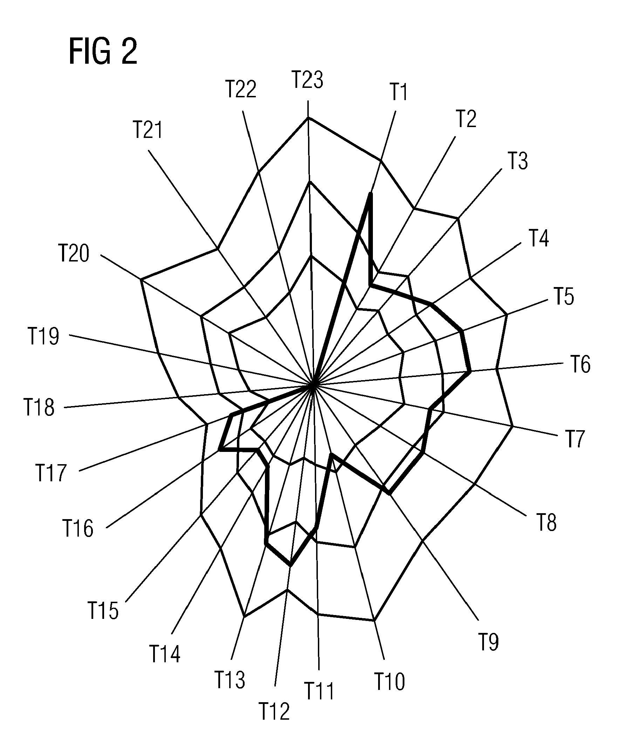

Mit Hilfe des Software-Programms 2 besteht dann die Möglichkeit, seinen eigenen Status mit den Vergleichsdaten zu vergleichen und hieraus Handlungsoptionen schnell abzuleiten. Eine derartige grafische Darstellung kann beispielsweise nach Art des in FIG 2 dargestellten "Spinnennetzes" erstellt werden. Hierbei geben die radial und etwa sternförmig nach außen gerichteten Achsen jeweils eine Teil-Kategorie T1 - T23 an. Auf diesen Achsen werden nunmehr für jede Teil-Kategorie die erfassten Wertzahlen des eigenen Status aufgetragen und miteinander verbunden (dicke Linie). Die Vergleichsdaten sind im Ausführungsbeispiel durch drei dünne Linien eingezeichnet, nämlich eine innere, die die minimalen Vergleichswerte angibt, eine äußere, die die maximalen Vergleichswerte angibt, sowie eine mittlere, die die gemittelten Werte der Vergleichswerte angibt. Es ist daher sofort zu erkennen, wie die eigene Position bzw. der eigene Status im Vergleich zu den Vergleichsdaten zu sehen ist und wo besonders starker Handlungsbedarf besteht.

Aufgrund der umfassend vorhandenen Daten besteht darüber hinaus die Möglichkeit, mit Hilfe des Algorithmus R Vorschläge für zukünftige Handlungen zu erstellen. Insbesondere werden hier unter Berücksichtigung der relevanten Faktoren eine Gegenüberstellung von unterschiedlichen Alternativen als Entscheidungsgrundlage für weitergehende Maßnahmen herausgearbeitet. Das Analyseergebnis wird schließlich in einem abschließenden Bericht zusammengefasst. Die in FIG 2 dargestellte grafische Vergleichsdarstellung sowie ein derartiger Situationsbericht werden auf einer Ausgabeeinheit 4, beispielsweise Bildschirm oder Drucker, ausgegeben.

Durch das hier beschriebene Verfahren wird den Entscheidungsträgern im Unternehmen ein sicheres, auf die Auswertung von umfassenden Daten basierendes Hilfsmittel an die Hand gegeben, um bei den aktuellen produkt- und prozessqualitätsrelevanten Kalibrierungsmaßnahmen eine Priorisierung der Handlungsoptionen vornehmen zu können. Erfahrungsgemäß ist es hierbei von Vorteil, wenn das Hauptaugenmerk auf der Kategorie der Effektivität der Kalibrierungsmaßnahmen und erst anschließend auf der Kategorie der Effizienz liegt. D.h. erfahrungsgemäß liegt in der Vermeidung von falschen Maßnahmen ein größeres Optimierungspotenzial als in der Prozessoptimierung. Durch die umfassenden Daten werden zudem Potenzialaussagen von Handlungsalternativen quantifizierbar. Durch die Implementierung von Vergleichsdaten, die beispielsweise den Standard in anderen Branchen oder anderen Unternehmen widerspiegeln, ist ein Wettbewerbervergleich oder auch ein Branchen übergreifender Vergleich möglich.

Das Verfahren lässt sich insgesamt auf drei Grundschritte zurückführen, nämlich zum einen die Erfassung der Daten, basierend insbesondere auf einer Fragetechnik, wobei zugleich die Erstellung und Bewertung einer Messmittelliste sowie die Einordnung der Unternehmenskenndaten U in Kategorien und UnterKategorien erfolgt. Anschließend erfolgt mit Hilfe eines softwaregestützten Bewertungssystems eine Einordnung der Daten in ein Bewertungsschema, um eine möglichst objektive Aussagequalität zu erhalten. Schließlich werden zusammen mit den betriebswirtschaftlichen Ist-Kennzahlen B mögliche Maßnahmen evaluiert und die Potenziale von Handlungsalternativen dargestellt und insbesondere auch quantifiziert.

So werden beispielsweise bei der Darstellung einer Handlungsalternative die aktuellen Bestandskosten, die Kosten für Inhouse-Kalibrierung, die Höhe der Ausfall- bzw. Stillstandszeiten während der Kalibriermaßnahme und die theoretische Produktionsmenge pro Zeiteinheit berücksichtigt und daraus abgeleitet, welcher zusätzliche Produktions-Output möglich ist, wenn die Kalibriermaßnahmen effektiver konzeptioniert und durchgeführt werden. Da eine solche Analyse insbesondere auch gesamt-unternehmensspezifische Daten berücksichtigt, werden für das Gesamtunternehmen vorteilhaftere Entscheidungen möglich. So wird beispielsweise bei der Frage, ob eine Kalibriermaßnahme inhouse oder außerhalb durchgeführt werden soll, nicht nur eine Gegenüberstellung der Fremd- und Eigenkosten vorgenommen, vielmehr wird zusätzlich noch ein möglicher zusätzlicher Produktionsausfall mit berücksichtigt.

Insgesamt werden durch dieses Verfahren die Belange unterschiedlicher organisatorischer Einheiten innerhalb des Unternehmens zusammengeführt und berücksichtigt, um eine fundierte Entscheidungsgrundlage für zukünftige Handlungen im Sinne des Gesamtunternehmens zu erhalten.

## Patentansprüche

1. Verfahren zur Verbesserung eines Produktionsablaufs innerhalb einer Produktionseinheit, bei der Produkte oder Produktionsschritte mit Hilfe von Messmitteln überprüft werden und die Messmittel in regelmäßigen Zeitintervallen kalibriert werden, wobei zu den in der Produktionseinheit eingesetzten Messmitteln messmittelspezifischen Daten (M) sowie im Zusammenhang mit Kalibriermaßnahmen stehende Unternehmenskenndaten (U) in einem Computersystem zentral erfasst und analysiert werden, wobei anhand der Analyseergebnisse Aussagen über die Relevanz der Kalibriermaßnahmen getroffen werden.

2. Verfahren nach Anspruch 1, bei dem die Unternehmenskenndaten (U) mehrere der nachfolgenden jeweils eine Kategorie bildenden Datensätze umfassen
- einen Datensatz (T5, T6) betreffend die Effektivität der Kalibriermaßnahmen
- einen Datensatz (T7, T8) betreffend die Effizienz der Kalibriermaßnahmen
- einen Datensatz (T9 - T11) betreffend die Infrastruktur zu den eingesetzten Messmitteln
- einen Datensatz (T12 - T18) betreffend operative Unternehmensdaten
- einen Datensatz (T1 - T4) betreffend strategische Unternehmensdaten.

3. Verfahren nach Anspruch 2, bei dem die Datensätze sich aus Teildatensätze (T1 - T23) zu Teilkategorien zusammensetzen.

4. Verfahren nach einem der vorhergehenden Ansprüche, bei dem zusätzliche oder alternative, für die Produktionseinheit relevante Messmittel für die Analyse berücksichtigt werden.

5. Verfahren nach einem der vorhergehenden Ansprüche, bei dem zur Analyse zusätzlich aktuelle betriebswirtschaftliche Ist-Kennzahlen (B) herangezogen werden.

6. Verfahren nach einem der vorhergehenden Ansprüche, bei dem anhand der erfassten Daten mit Hilfe eines hinterlegten Algorithmus (R) eine Entscheidungsgrundlage für künftige Maßnahmen erstellt wird.

7. Verfahren nach einem der Ansprüche 2 bis 6, bei dem zu jedem einzelnen Datensatz (T1 - T23) eine Teilanalyse der Daten durchgeführt wird und anhand des Teil-Analyseergebnisses ein Bewertungsfaktor für die Kategorie ermittelt wird.

8. Verfahren nach einem der vorhergehenden Ansprüche, bei dem die erfassten Unternehmenskenndaten (U) mit Vergleichsdaten (V) verglichen werden.

9. Verfahren nach Anspruch 7 und 8, bei dem die Bewertungsfaktoren und aus den Vergleichsdaten abgeleitete Vergleichsbewertungsfaktoren der einzelnen Kategorien oder Teilkategorien (T1 - T18) grafisch dargestellt werden.

10. Verfahren nach einem der vorhergehenden Ansprüche, bei dem die Erfassung der Unternehmenskenndaten (U) anhand eines standardisierten Fragenkatalogs erfolgt.

11. Verfahren nach einem der vorhergehenden Ansprüche, bei dem die Unternehmenskenndaten (U) eine oder mehrere branchenspezifische Teilkategorien (T19 - T22) umfassen, wobei die zugehörigen Datensätze branchenabhängig bedarfsweise erfasst werden.

12. Verfahren nach einem der vorhergehenden Ansprüche, bei dem die Unternehmenskenndaten (U) eine unternehmensspezifische Teilkategorie (T23) umfassen, wobei der zugehörige Datensatz individuelle Belange des jeweiligen Unternehmens wiedergibt.

13. Software-Programm zur Erfassung und Bewertung von Daten im Zusammenhang mit Kalibriermaßnahmen an in einer Produktionseinheit eingesetzten Messmitteln, das ein Modul (m) zur Erfassung von messmittelspezifischen Daten (M) zu den Messmitteln sowie ein standardisiertes Grundmodul (u1) zur Erfassung von im Zusammenhang mit Kalibriermaßnahmen stehende Unternehmenskenndaten (U) umfasst, und das die erfassten Daten im Hinblick auf die Relevanz der Kalibriermaßnahmen analysiert.

14. Software-Programm nach Anspruch 13, bei dem ein branchenspezifisches Erweiterungsmodul (e1) zur Erfassung von branchenspezifischen Daten vorgesehen ist.

15. Software-Programm nach Anspruch 13 oder 14, bei dem ein unternehmensspezifisches Erweiterungsmodul (e2) zur Erfassung von individuellen unternehmensspezifischen Daten vorgesehen ist.

16. Computerlesbares Medium, auf dem ein Software-Programm nach einem der Ansprüche 13 bis 15 gespeichert ist.

17. Computerlesbares Medium, wobei das Medium einen Softwarecodeabschnitt aufweist, welcher ein Computersystem zur Durchführung des Verfahrens nach Anspruch 1 veranlasst.
